**Europäisches Patentamt**

**European Patent Office**

**Office européen des brevets**

(1) Publication number: **0 219 513**

**B1**

# EUROPEAN PATENT SPECIFICATION

(45) Date of publication of patent specification: **18.04.90**

(51) Int. Cl.⁵: **G 02 B 6/00**

(21) Application number: **86902044.6**

(22) Date of filing: **24.02.86**

(86) International application number:
**PCT/SE86/00078**

(87) International publication number:
**WO 86/05280 12.09.86 Gazette 86/20**

(54) LIGHTPEN.

(30) Priority: **01.03.85 SE 8501015**

(43) Date of publication of application:
**29.04.87 Bulletin 87/18**

(45) Publication of the grant of the patent:
**18.04.90 Bulletin 90/16**

(84) Designated Contracting States:
**DE FR GB IT**

(56) References cited:
**EP-A-0 058 574**
**DE-A-2 424 620**
**DE-C-2 529 339**
**FR-A-1 405 508**
**GB-A-1 321 783**
**NO-B- 141 283**
**US-A-3 740 113**
**US-A-3 942 866**
**US-A-3 995 934**
**US-A-4 398 790**

(73) Proprietor: **TELEFONAKTIEBOLAGET L M
ERICSSON**
**S-126 25 Stockholm (SE)**

(72) Inventor: **PERSSON, Sven, Anders, Roland**
**Vapengatan 3**
**S-126 52 Hägersten (SE)**

Courier Press, Leamington Spa, England.

## Description

The invention relates to an optical cable intended for use in reading an optical information carrier, the cable comprising a light conducting structure for transmitting light from the information carrier to a light-sensitive receiver, said light conducting structure comprising, respectively a major longitudinal portion consisting of an optical fibre with a comparatively large light acceptance angle, and an end-portion, disposed at the end of said optical fibre remote from the receiver, and consisting of means for limiting the light acceptance angle of the light conducting structure in order to obtain good resolution in reading.

Light conductors have different properties with relation to flexibility, light divergence angle, and light acceptance angle depending on what material they are made from. These divergence and acceptance angles are equally as great for a given light conductor and represent the angle within which the light can be spread from divergence angle, or collected by acceptance angle, the end of the light conductor. A plastics optical fibre is thus relatively pliant and generally has a comparatively large light divergence and acceptance angle. Fibres having a comparatively small light divergence and acceptance angle are usually manufactured from glass or quartz. However, such fibres are not as pliant as plastics fibres and furthermore, they are more easily damaged by bending. As an example of the magnitude of the light divergence and light acceptance angle it may be stated that in a plastics fibre this is usually between 45 and 90°, while the corresponding angle for a glass or quartz fibre is usually only about 15 to 40°.

In US—3,942,866 there is described an optical cable for optical reading comprising an optical fibre with a light-absorbing shield extending beyond an end face of the fibre. The light-absorbing shield forms a light-guiding channel, which limits the effective light acceptance angle of the fibre compared to its inherent value.

In the G.B. specification 1375963 there is described an optical cable intended for use in reading an optical information carrier. The cable contains a plurality of fibre conductors, of which the majority are utilised for illuminating the information carrier, and one for transmitting the light reflected from the carrier to a light-sensitive receiver.

If the information carrier is a display screen, no further illumination thereof is necessary, and thus no fibres which lead light to it. Irrespective of how the information carrier is illuminated, however, it is desirable that the so-called reading fibre, i.e. the fibre which transmits light from the information carrier to the light-sensitive receiver, has a small light acceptance angle. Good resolution is obtained in such a case, which is important for reading information such as bar codes.

An object of the present invention is to provide an optical cable of the kind mentioned in the introduction, which is easy to bend, while at the same time the light conductor for transmitting light to the light-sensitive receiver will only be able to take up light from the information carrier within a comparatively small angle.

A further object of the present invention is to provide an optical cable of the kind mentioned in the introduction, which has a solid and strong end portion with a plane end surface. A plane end surface is advantageous because there is no cavity into which an adhesive can find its way during assembly or into which dirt can find its way after assembly, which could reduce or prevent the light transmission into the fibre.

These objects are achieved by the cable having been given the characterizing features as disclosed in the claims.

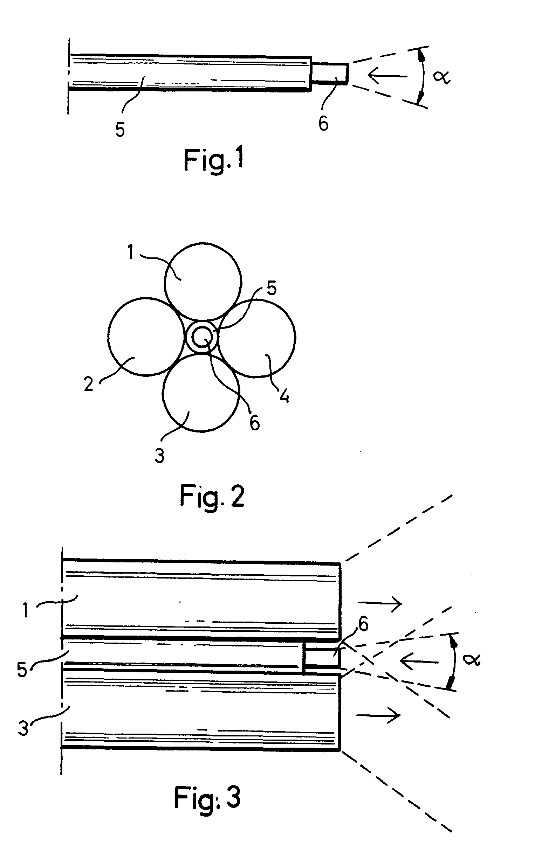

The invention will now be described in detail with reference to the accompanying drawing, on which Figure 1 is a side elevation for an optical cable according to the present invention, Figure 2 is an end elevation of the light conductors in an optical cable of the invention comprising several light conductors, and Figure 3 is a side elevation of certain of the light conductors in the cable according to Figure 2.

A side elevation of an optical cable according to the present invention is shown in Figure 1. The cable is intended for use in reading an optical information carrier such as a display screen and comprises a light conducting structure denoted by the numeral 7 for transmitting light from the screen to a light-sensitive receiver. The light conducting structure 7 mainly comprises an optical fibre 5 made from an easily bendable material with a comparatively large light acceptance angle. The end portion of the light-conducting structure 7 facing towards the screen comprises a separate fibre section 6 from a material with a comparatively small light acceptance angle α. The easily bendable and major portion 5 of the light conducting structure 7 can be made from plastics, e.g. polymethyl methacrylate, and the separate fibre section 6 forming the end portion from glass or quartz.

The illustrated cable can thus be easily bent and wound into a helix shape. Since the end portion 6 of the light conducting structure 7 has a small light acceptance angle, there is obtained a better resolution in reading than if this had also been made from a more easily bendable material with a greater light acceptance angle.

Figure 2 is an end elevation of the light conductors in an optical cable containing several light conductors, and Figure 3 is a side elevation of certain of these conductors. They comprise optical fibres 1—6, of which the fibres 2 and 4 have been left out in Figure 3, for the sake of clarity. The fibres 5 and 6 correspond to the light conducting structure 7 according to Figure 1. The fibres 1—4 are manufactured from an easily bendable material with a comparatively large light acceptance angle. These fibres extend along the sides of the fibres 5 and 6 and are utilized for illuminating an optical information carrier, which does not generate light itself. The light conducting structure 7 thus catches the reflected light in the fibre section 6 and transmits it via the fibre 5 to a light-sensitive receiver at the other end of the conducting structure. Light directions and approximate light angles are indicated by arrows and dashed lines in Figure 3.

Since the cable according to Figures 2 and 3 also contains light conductors of an easily bendable material, except the fibre section 6, the same advantages are obtained with reference to flexibility and resolution as with the embodiment according to Figure 1. The fibres 1—4, intended for illumination, also spread the light relatively uniformly on the information carrier, as a result of their comparatively large light divergence angles.

With the illustrated embodiments there is thus obtained a cable which is durable and easy to bend, while having good optical properties at the same time. Of course, the cable can be further varied within the scope of the following claims. For example, the number of the light conductors and thus their interrelating dimensions may be varied. Fabrication material other than those given above is also conceivable.

## Claims

1. Optical cable intended for use in reading an optical information carrier, the cable comprising a light conducting structure (7) for transmitting light from the information carrier to a light-sensitive receiver, said light conducting structure (7) comprising, respectively, a major longitudinal portion (5) consisting of an optical fibre (5) with a comparatively large light acceptance angle, and an end-portion (6), disposed at the end of said optical fibre (5) remote from the receiver, and consisting of means for limiting the light acceptance angle ($\alpha$) of the light conducting structure (7) in order to obtain good resolution in reading, characterized in that said optical fibre (5) constituting the major portion of the light conducting structure (7) is manufactured from an easily bendable material, and in that said limiting means (6) consists of a separate optical fibre section (6), the light acceptance angle ($\alpha$) of which is less than the corresponding angle of said optical fibre (5) constituting the major portion of the light conducting structure (7), and the constituent material of which is less easily bendable than that of said optical fibre (5).

2. Optical cable as claimed in claim 1, characterized in that said major portion (5) of the light conducting structure (7) is manufactured from plastics and that said separate optical fibre section (6) is made from glass or quartz.

3. Optical cable as claimed in claims 1 or 2, characterized in that the light acceptance angle of said separate optical fibre section (6) is about 15 to 40°, and that the corresponding angle for said major portion (5) of the light conducting structure (7) is about 45 to 90°.

4. Optical cable as claimed in claim 1, characterized in that it also comprises a plurality of light conductors (1—4), which are utilized for illuminating the information carrier, and in that each one of these conductors (1—4) consists of an optical fibre which is manufactured from an easily bendable material.

5. Optical cable as claimed in claim 4, characterized in that the light acceptance angle of the light conductors (1—4) which are utilized for illuminating the information carrier is greater than the corresponding angle of said separate optical fibre section (6).

6. Optical cable as claimed in claims 4 or 5, characterized in that the light conductors (1—4, 7) are manufactured from plastics with the exception of said separate optical fibre section (6) which is made from glass or quartz.

7. Optical cable as claimed in claims 4, 5 or 6, characterized in that the light acceptance angle of said separate optical fibre section (6) is about 15 to 40°, and that the corresponding angle of the remaining light conductors (1—4, 7) is about 45 to 90°.

## Patentansprüche

1. Optisches Kabel, das zur Anwendung beim Lesen eines optischen Informationsträgers vorgesehen ist, wobei das Kabel umfaßt: eine lichtleitende Struktur (7) zum Übertragen eines Lichts von dem Informationsträger zu einem lichtempfindlichen Empfänger, und wobei die lichtleitende Struktur (7) dementsprechend umfaßt: einen größeren Längsabschnitt (5), bestehend aus einer Lichtleitfaser (5) mit einem vergleichsweise großen Lichtöffnungswinkel, und einen Endabschnitt (6), der an dem Ende der Lichtleitfaser angeordnet ist, das vom Empfänger abgewandt ist, und aus einer Einrichtung zum Begrenzen des Lichtöffnungswinkel ($\alpha$) der lichtleitenden Struktur (7) besteht, um eine gute Auflösung beim Lesen zu erhalten, dadurch gekennzeichnet, daß die den größeren Abschnitt der lichtleitenden Struktur (7) bildende Lichtleitfaser (5) aus einem leicht biegbaren Material hergestellt ist, und daß die Begrenzungseinrichtung (6) aus einem getrennten Lichtleitfaserabschnitt (6) besteht, dessen Lichtöffnungswinkel ($\alpha$) kleiner ist als der entsprechende Winkel der den größeren Abschnitt der lichtleitenden Struktur bildenden Lichtleitfaser (5), und dessen sie bildendes Material weniger leicht biegbar ist als das der Lichtleitfaser (5).

2. Optisches Kabel nach Anspruch 1, dadurch gekennzeichnet, daß der größere Abschnitt (5) der lichtleitenden Struktur (7) aus Kunststoffen hergestellt ist und daß der getrennte Lichtleitfaserabschnitt (6) aus Glas oder Quarz hergestellt ist.

3. Optisches Kabel nach Anspruch 1 oder 2, dadurch gekennzeichnet, daß der Lichtöffnungswinkel des getrennten Lichtleitfaserabschnitts (6) ca. 15 bis 40° beträgt und daß der entsprechende Winkel des größeren Abschnitts (5) der lichtleitenden Struktur (7) ca. 45 bis 90° beträgt.

4. Optisches Kabel nach Anspruch 1, dadurch gekennzeichnet, daß es des weiteren eine Vielzahl von Lichtleitern (1—4) umfaßt, die zum Beleuchten des Informationsträgers vorgesehen sind, und daß jede dieser Leitern (1—4) aus einer Lichtleitfaser besteht, die aus einem leicht biegbaren Material hergestellt ist.

5. Optisches Kabel nach Anspruch 4, dadurch gekennzeichnet, daß der Lichtöffnungswinkel der Lichtleiter (1—4), die zum Beleuchten des Informationsträgers verwendet werden, größer als der entsprechende Winkel des getrennten Lichtleitfaserabschnitts (6) ist.

6. Optisches Kabel nach Anspruch 4 oder 5, dadurch gekennzeichnet, daß die Lichtleiter (1—4, 7) mit Ausnahme des getrennten Lichtleitfaserabschnitts (6), der aus Glas oder Quarz hergestellt ist, aus Kunststoffen hergestellt sind.

7. Optisches Kabel nach den Ansprüchen 4, 5 oder 6, dadurch gekennzeichnet, daß der Lichtöffnungswinkel des getrennten Lichtleitfaserabschnitts (6) ca. 15 bis 40° beträgt und daß der entsprechende Winkel der übrigen Lichtleiter (1—4, 7) ca. 45 bis 90° beträgt.

## Revendications

1. Câble optique destiné à être utilisé dans la lecture d'un support d'informations optiques, le câble comprenant une structure (7) conductrice de la lumière destinée à transmettre la lumière du support d'information à un récepteur sensible à la lumière, ladite structure (7) conductrice de la lumière comprenant, respectivement, une partie longitudinale principale (5) consistant en une fibre optique (5) ayant un angle relativement grand de réception de la lumière, et une partie extrême (6), disposée à l'extrémité de ladite fibre optique (5) éloignée du récepteur, et consistant en des moyens destinés à limiter l'angle (α) de réception de la lumière de la structure (7) conductrice de la lumière afin que l'on obtienne une bonne résolution à la lecture, caractérisé en ce que ladite fibre optique (5) constituant la partie principale de la structure (7) conductrice de la lumière est fabriquée en une matière aisément courbable, et en ce que lesdits moyens (6) de limitation consistent en un tronçon de fibre optique séparé (6) dont l'angle (α) de réception de la lumière est inférieur à l'angle correspondant de ladite fibre optique (5) constituant la partie principale de la structure (7) conductrice de la lumière, et dont la matière constitutive est moins aisément courbable que celle de ladite fibre optique (5).

2. Câble optique selon la revendication 1, caractérisé en ce que ladite partie principale (5) de la structure (7) conductrice de la lumière est fabriquée en une matière plastique et en ce que ledit tronçon de fibre optique séparé (6) est réalisé en verre ou en quartz.

3. Câble optique selon la revendication 1 ou 2, caractérisé en ce que l'angle de réception de la lumière dudit tronçon de fibre optique séparé (6) est d'environ 15 à 40°, et en ce que l'angle correspondant pour ladite partie principale (5) de la structure (7) conductrice de la lumière est d'environ 45 à 90°.

4. Câble optique selon la revendication 1, caractérisé en ce qu'il comporte aussi plusieurs conducteurs (1—4) de la lumière qui sont utilisés pour éclairer le support d'information, et en ce que chacun de ces conducteurs (1—4) consiste en une fibre optique qui est fabriquée à partir d'une matière aisément courbable.

5. Câble optique selon la revendication 4, caractérisé en ce que l'angle de réception de la lumière des conducteurs (1—4) de la lumière qui sont utilisés pour éclairer le support d'informations est plus grand que l'angle correspondant dudit tronçon de fibre optique séparé (6).

6. Câble optique selon la revendication 4 ou 5, caractérisé en ce que les conducteurs (1—4, 7) de la lumière sont fabriqués en matière plastique à l'exception dudit tronçon de fibre optique séparé (6) qui est réalisé en verre ou en quartz.

7. Câble optique selon la revendication 4, 5 ou 6, caractérisé en ce que l'angle de réception de la lumière dudit tronçon de fibre optique séparé (6) est d'environ 15 à 40°, et en ce que l'angle correspondant des autres conducteurs (1—4, 7) de la lumière est d'environ 45 à 90°.

EP 0 219 513 B1

Fig. 1

Fig. 2

Fig. 3

1